Europäisches Patentamt

European Patent Office

Office européen des brevets

(11) Publication number: **0 514 029 A2**

# EUROPEAN PATENT APPLICATION

(21) Application number: **92303657.8**

(22) Date of filing: **23.04.92**

(51) Int. Cl.5: **G02F 1/136**

(30) Priority: **15.05.91 JP 138667/91**

(43) Date of publication of application:
**19.11.92 Bulletin  92/47**

(84) Designated Contracting States:
**DE FR GB**

(71) Applicant: **International Business Machines Corporation**
**Old Orchard Road**
**Armonk, N.Y. 10504(US)**

(72) Inventor: **Atsumi, Masakazu**
**Akanehaitsu 101, 346-2 Naruse**
**Machida-shi, Tokyo-to(JP)**
Inventor: **Matsumoto, Takeshi**
**Binamansion B35, 4chome14ban18goh**
**Matsugaoka**
**Kugenuma, Fufisawa-shi, Kanagawa-ken(JP)**
Inventor: **Yoshida, Toshihiko**
**Foresthills Miho Itoh211goh, 930banchi24**
**Mihocho**
**Midori-ku, Yokohama-shi, Kanagawa-ken(JP)**

(74) Representative: **Blakemore, Frederick Norman**
**IBM United Kingdom Limited Intellectual**
**Property Department Hursley Park**
**Winchester Hampshire SO21 2JN(GB)**

(54) **Liquid crystal display apparatus.**

(57) A liquid crystal display comprises pixels (34) arranged in a matrix at the intersections of scan lines (31) and data lines (32). Each pixel (34) is a provided with a separate storage capacitor (35). The pixels are arranged into groups of adjacent pixels (34). Each group corresponds to a separate auxiliary storage capacitor (37). Each auxiliary storage capacitor (37) is connectable to any one of the pixels (34) in the corresponding group. Because the auxiliary storage capacitors (37) are shared by groups of pixels (34), the liquid crystal display has higher aperture efficiency despite redundancies in its construction.

FIG. 1

EP 0 514 029 A2

The present invention relates to a liquid crystal display using active elements such as TFTs, and more particularly to a liquid crystal display which has high aperture efficiency.

In a fine fabricated active matrix-type liquid crystal display with a large-sized screen, it is necessary to form picture elements to a scale that is much the same as that of memory elements in a large semiconductor memory such as a 4M DRAM on a diagonally 14 inch-sized large screen. However, it is very difficult to obtain a high yield percentage of finished goods even in a manufacturing process with fault tolerance at the same level as in DRAM.

In a DRAM, auxiliary word and bit lines which serve as auxiliary memory cells are provided so that if there is a fault in a main memory cell, its auxiliary memory cell can be used instead. However, in a liquid crystal display, unless a faulty pixel is repaired at the time of its occurrence, the pixel is never fit for use. Therefore, in an active matrix-type liquid crystal display, it is necessary to provide an auxiliary storage capacitor or non-linear element such as a Thin Film Transistor (TFT). The larger the screen of the display, and the finer the fabrication, the greater the possibility of fault occurrences, and thus the greater the necessity of redundant construction.

Generally, in a TFT active matrix-type liquid crystal display, a plurality of scan lines (called gate lines) and a plurality of data lines are formed in the horizontal and the vertical directions, respectively. A TFT is provided at the respective intersections of the scan and the data lines. A separate display electrode is connected to each TFT. Means for applying a scan voltage and a data signal voltage to each scan line and data line, respectively, is provided so that the optical characteristic of a liquid crystal element at each display electrode can be modulated in accordance with the above voltage. To prevent picture images from changing due to variations in the characteristics of TFTs or variations in liquid crystal elements, a storage capacitor is provided for each pixel in parallel with the liquid crystal element. There are several methods for forming the storage capacitors.

A defect in a pixel, which is caused by a short-circuited storage capacitor, can be completely overcome by introducing redundant construction. The redundant construction reduces the area of a liquid crystal element through which light can pass. In other words, the aperture efficiency, which is a ratio of the area of one display electrode to the area of one pixel, is decreased. The aperture efficiency is a major factor in determining screen brightness. It therefore decides both the display quality and power consumed by the liquid crystal display back light. It will be appreciated that removal of the redundant construction would improve aperture efficiency but mitigate against high yield.

In accordance with the present invention, there is now provided liquid crystal display apparatus comprising: a plurality of pixels arranged in a matrix at the intersections of a plurality of scan lines and a plurality of data lines; and a plurality of storage capacitors each for connection to a different one of the pixels; characterised in that the apparatus further comprises a plurality of auxiliary storage capacitors each being connectable to one pixel of a corresponding group of adjacent pixels.

The present invention thus advantageously provides a redundantly constructed liquid crystal display which has high aperture efficiency.

Each group of adjacent pixels may comprise two pixels disposed between adjacent scan lines, and the two storage capacitors corresponding to the two pixels and the auxiliary storage capacitor are formed on a storage capacitor line parallel to the scan lines. Alternatively, each group of adjacent pixels may comprise two pixels disposed between adjacent data lines, and the two storage capacitors corresponding to the two pixels and the auxiliary storage capacitor are formed on a storage capacitor line parallel to the data lines.

In a preferred embodiment of the present invention, each group of adjacent pixels comprises four pixels disposed between adjacent data lines and between adjacent scan lines, and the four storage capacitors and the auxiliary storage capacitor are formed on a storage capacitor line parallel to the scan lines.

In another preferred embodiment of the present invention, each group of adjacent pixels comprises four pixels disposed between adjacent data lines and between adjacent scan lines, and the four storage capacitors and the auxiliary storage capacitor are formed on a storage capacitor line parallel to the data lines.

Viewing a second aspect of the present invention, there is provided liquid crystal display apparatus wherein a plurality of pixels are arranged in a matrix at the intersections of a plurality of scan lines and a plurality of data lines and storage capacitor lines are provided to supply the pixels with storage capacitors, characterised in that the pixels are arranged in groups of two pixels adjoining each other by arranging the scan lines in groups of two pixels adjoining each other and one storage capacitor line is provided every two adjoining pixels between the scan lines in the same direction of the scan lines whereby two storage capacitors corresponding to the two adjoining pixels are provided for each storage capacitor line and one auxiliary storage capacitor is provided to be shared by every two adjoining pixels.

Viewing a third aspect of the present invention, there is provided liquid crystal display apparatus wherein a plurality of pixels are arranged in a matrix at the intersections of a plurality of scan lines and a plurality of data lines and storage capacitor lines are provided to supply the pixels with storage capacitors, characterised in that the pixels are arranged in groups of two pixels adjoining each other by arranging the data lines in groups of two pixels adjoining each other and one storage capacitor line is provided every two adjoining pixels between a plurality of the data lines in the same direction of the data lines whereby two storage capacitors corresponding to the two adjoining pixels are provided for each the storage capacitor line and one auxiliary storage capacitor is provided to be shared by every two adjoining pixels.

Viewing a fourth aspect of the present invention, there is provided, liquid crystal display apparatus wherein a plurality of pixels are arranged in a matrix at the intersections of a plurality of scan lines and a plurality data lines and storage capacitor lines are provided to supply the pixels with storage capacitors, characterised in that the pixels are arranged in groups of four pixels adjoining each other by arranging the scan lines in groups of two pixels adjoining each other and by arranging the data lines in groups of two pixels adjoining each other and one storage capacitor line is provided between the scan lines in the same direction of the scan lines whereby four storage capacitors corresponding to the four adjoining pixels are provided for each storage capacitor line and one auxiliary storage capacitor is provided to be shared by every four adjacent pixels.

Viewing a fifth aspect of the present invention, there is provided liquid crystal display apparatus wherein a plurality of pixels are arranged in a matrix at the intersections of a plurality of scan lines and a plurality data lines and storage capacitor lines are provided to supply the pixels with storage capacitors, characterised in that the pixels are arranged in groups of four pixels adjoining each other by arranging the scan lines in groups of two pixels adjoining each other and by arranging the data lines in groups of two pixels adjoining each other and one storage capacitor line is provided between the data lines in the same direction of the data lines whereby four storage capacitors corresponding to the four adjoining pixels are provided for each storage capacity line and one auxiliary storage capacitor is provided to be shared by every four adjacent pixels.

Preferably, the capacitance of the auxiliary storage capacitor is less than that of the storage capacitor.

In a conventional liquid crystal display, one scan line, one data line, one storage capacitor line, and one auxiliary capacitor are provided for each pixel. However, in a liquid crystal display of the present invention, a storage line is common to adjacent pixels. For example, adjacent pixels can mean upper and lower pixels, or opposite handed pixels between which the storage capacitor line is placed. Alternatively, adjacent pixels can mean four adjacent pixels in a square. An auxiliary storage capacitor is provided on the common storage line. Because the auxiliary storage capacitor is effectively shared by the two or the four pixels, the area occupied by each pixel electrode can be reduced and the effective area each liquid crystal element can be increased.

From the standpoint of the actual frequency of faults, there is no probability that faults occur successively in adjacent plural pixels and therefore the sharing of the auxiliary storage capacitor by adjacent plural pixels does not hinder fault repair.

Japanese Published Unexamined Patent Application No.64-73324 discloses the sharing of a storage capacitor line, but does not suggest that its construction is such that an auxiliary storage capacitor is shared by plural pixels.

Preferred embodiments of the present invention will now be described with reference to the accompanying drawings in which:

Figure 1 is a plan view of a liquid crystal display of the present invention;

Figure 2 is a plan view of another liquid crystal display of the present invention;

Figure 3 is a plan view of a conventional liquid crystal display;

Figure 4 is a block diagram of a conventional liquid crystal display; and

Figure 5 shows a block diagram of a liquid crystal display of the present invention.

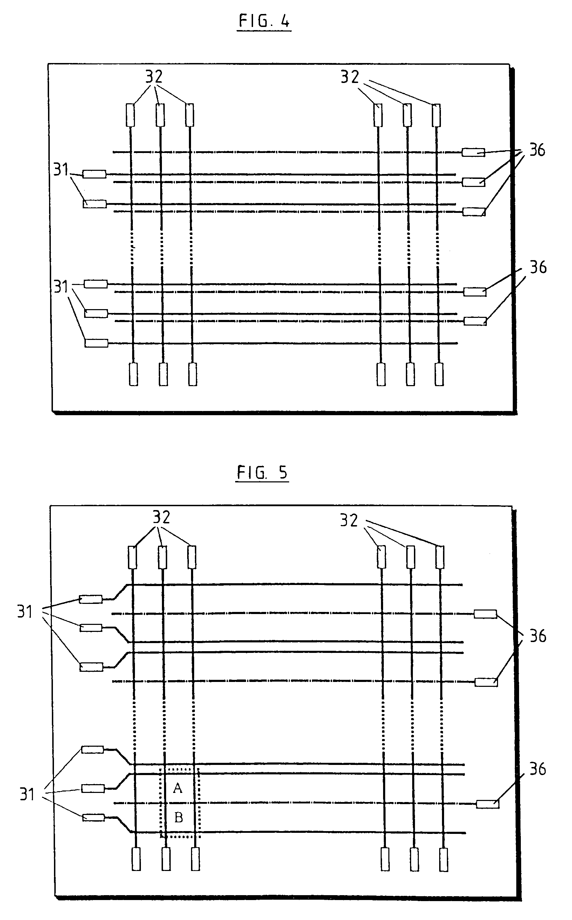

Referring first to Figure 4, a conventional redundant construction of a liquid crystal display, a data line 32 is disposed in the vertical direction. One electrode of the storage capacitor is connected to a display electrode. The other electrode is connected to an electrode line (Called a storage capacitor line or merely called a Cs line) 36 formed in the horizontal direction of a scan line 31.

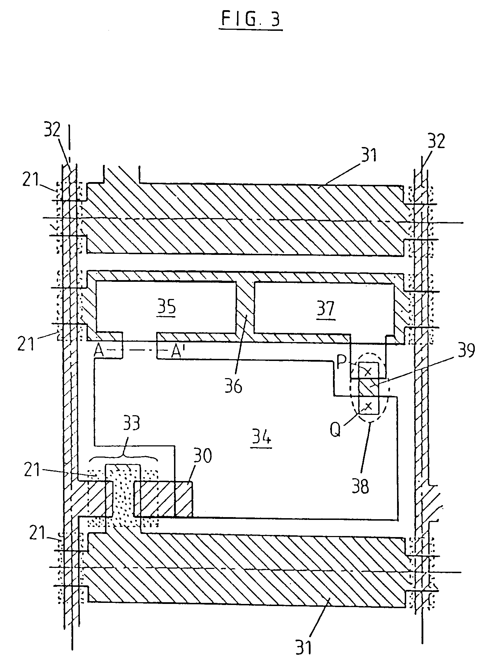

Figure 3 is an enlarged view of each pixel in which an auxiliary storage capacitor is being added to the above redundant construction. Voltage is applied to a display electrode 34 connected to a source electrode 30 of a TFT 33 selected by the scan line 31 and data line 32 to modulate the optical characteristics of liquid crystal elements. A storage capacitor (Cs1) 35 is formed in parallel with display electrode 34 to suppress variation in the characteristics of the liquid crystal elements. One electrode of storage capacitor (Cs1) 35 is made of the same material as display electrode 34 and the other is formed by the Cs line 36, which extends in the same direction of scan line 31, with an insulating film in between. One electrode of an auxiliary storage capacitor (Cs2) 37 is made of the same material as display electrode 34 and the other is formed, similarly by Cs line 36. Auxiliary storage capacitor (Cs2) 37 is not usually connected to display electrode 34. Instead, it is constructed to he connected to display electrode 34 via a switch connection part 38 including a pattern 39 made of the same metal as scan line 31. An insulating film separates the pattern 39 from both auxiliary storage capacitor 37 and display electrode 34.

If main storage capacitor (Cs1) 35 and Cs line 36 are short-circuited by a faulty insulating film, for example, that pixel will be displayed as a bright or dark spot. In this case, storage capacitor (Cs1) 35 can be disconnected from display electrode 34 at AA' using a YAG laser, for example. One electrode of auxiliary storage capacitor (Cs2) 37, pattern 39 and display electrode 34 are interconnected, by the YAG laser, at points P and Q, respectively, in switch connection part 38. Thus such a display fault can be overcome. Region 21 shown in Figure 3 is a semiconductor layer.

Figure 5 shows the arrangement of the scan, the data, and the Cs lines in an embodiment of the present invention. Two pixels A and B are repeated as a basic unit. Scan lines 31 are bus lines for gate electrodes and data lines 32 are bus lines for drain electrodes. Scan lines 31 are arranged adjacently every two lines and a Cs line 36, which is a bus line for a storage capacitor electrode, is provided between pixels A and B.

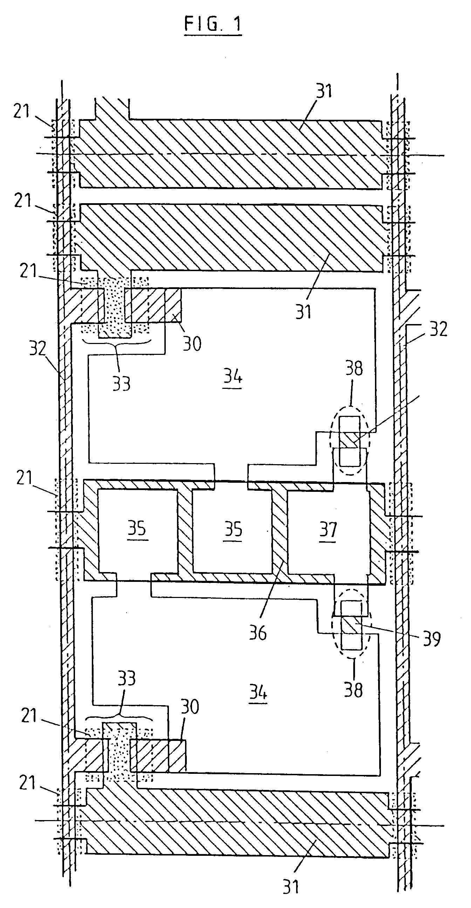

Referring now Figure 1, 31 is a scan line (gate electrode), 32 is a data line (drain electrode), 36 is a shared Cs line, 35 is a storage capacitor, 37 is an auxiliary storage capacitor shared by the two pixels A and B, 33 is a TFT part, 34 is a display electrode, 38 is a switch connection part, 39 is a pattern, which is a component of the switch control part, made of the same metal as the scan line (gate electrode), 21 is a semiconductor layer, and 30 a source electrode for connecting the TFT part to the display electrode. According to the present invention, Cs line 36 and auxiliary storage capacitor 37 are shared by respective two pixels so that the area occupied by the display electrode can be increased. The area of the display electrode constructed in accordance with the present invention can therefore be greater by approximately 20% than that of the prior art. In another embodiment of the present invention (not shown), data lines are adjacently provided, instead of the scan lines, in a unit of two lines and the Cs line 36 is provided between two adjacent pixels A and B horizontally arranged in the direction of the data lines.

Embodiment (3)

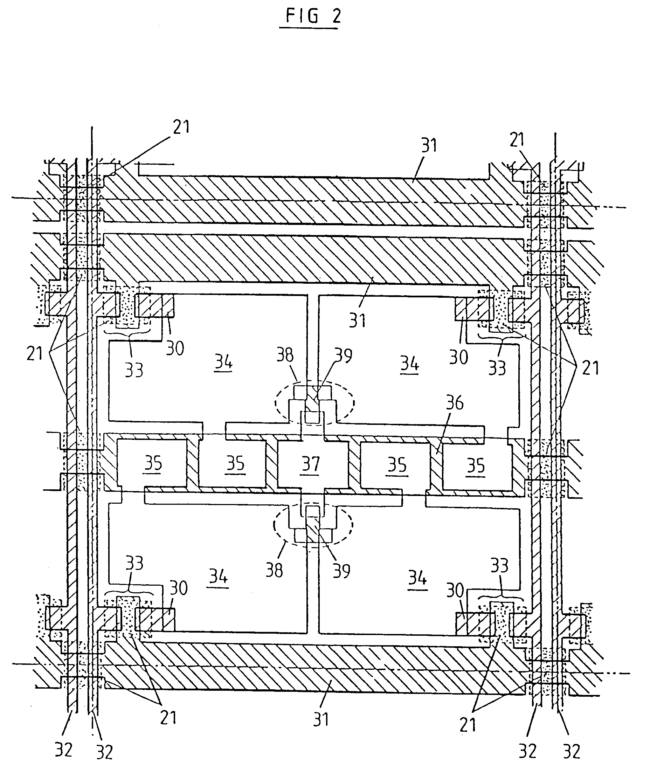

Referring now to Figure 2, in another embodiment of the present invention, scan lines (gate electrodes) 31 are provided adjacently in a unit of two scan lines. Similarly, data lines 32 are provided adjacently in a unit of two data lines. Thus four pixels are repeated as a basic unit. A Cs line 36 is provided in the direction of the scan line (gate electrode) 31. However, it will be appreciated that the Cs line 36 may be provided in the direction of the data line 32. An auxiliary storage capacitor is shared by four pixels and thus an area of a display electrode constructed according to the present invention can be increased by approximately 30% in comparison with that of the prior art of Figure 3. Numerals indicating components in Figure 2 are the same as in Figure 1.

It will be appreciated that diodes may be used as non-linear elements in the present invention, instead of the TFTs.

In the embodiments hitherto described, it is assumed that the size of auxiliary storage capacitor 37 is the same as that of main storage capacitor 35. However, it will be appreciated that the size of auxiliary storage capacitor 37 may be smaller than that of main storage capacitor 35 within the range of fault tolerance to obtain still higher aperture efficiency.

Further, if the occurrence of a fault tends to be confined to certain areas on the display screen, it will be appreciated that any combination of the conventional construction of Figure 3, the construction of sharing an auxiliary storage capacitor by two pixels, and the construction of sharing an auxiliary storage capacitor by four pixels may be used as needed depending on areas in which a fault most frequently occurs. For example, if a fault occurs in the upper or lower area rather than the middle area on the display screen, the construction of the present invention may be used for the middle area and the conventional construction of higher redundancy may be used for the upper or lower area on the screen.

It will be appreciated that the present invention hitherto described can be applied to both monochrome display and colour display.

**Claims**

1. Liquid crystal display apparatus comprising: a plurality of pixels (34) arranged in a matrix at the intersections of a plurality of scan lines (31) and a plurality of data lines (32); a plurality of storage capacitors (35) each for connection to a different one of the pixels (34);

characterised in that the apparatus further comprises a plurality of auxiliary storage capacitors (37) each being connectable to one pixel of a corresponding group of adjacent pixels.

2. Liquid crystal display apparatus as claimed in claim 1 wherein each group of adjacent pixels comprises two pixels disposed between adjacent scan lines, and the two storage capacitors corresponding to the two pixels and the auxiliary storage capacitor are formed on a storage capacitor line parallel to the scan lines.

3. Liquid crystal display apparatus as claimed in claim 1 wherein each group of adjacent pixels comprises two pixels disposed between adjacent data lines, and the two storage capacitors corresponding to the two pixels and the auxiliary storage capacitor are formed on a storage capacitor line parallel to the data lines.

4. Liquid crystal display apparatus as claimed in claim 1 wherein each group of adjacent pixels comprises four pixels disposed between adjacent data lines and between adjacent scan lines, and the four storage capacitors and the auxiliary storage capacitor are formed on a storage capacitor line parallel to the scan lines.

5. Liquid crystal display apparatus as claimed in claim 1 wherein each group of adjacent pixels comprises four pixels disposed between adjacent data lines and between adjacent scan lines and the four storage capacitors and the auxiliary storage capacitor are formed on a storage capacitor line parallel to the data lines.

6. Liquid crystal display apparatus wherein a plurality of pixels are arranged in a matrix at the intersections of a plurality of scan lines and a plurality of data lines and storage capacitor lines are provided to supply the pixels with storage capacitors, characterised in that the pixels are arranged in groups of two pixels adjoining each other by arranging the scan lines in groups of two pixels adjoining each other and one storage capacitor line is provided every two adjoining pixels between the scan lines in the same direction of the scan lines whereby two storage capacitors corresponding to the two adjoining pixels are provided for each storage capacitor line and one auxiliary storage capacitor is provided to be shared by every two adjoining pixels.

7. Liquid crystal display apparatus wherein a plurality of pixels are arranged in a matrix at the intersections of a plurality of scan lines and a plurality of data lines and storage capacitor lines are provided to supply the pixels with storage capacitors, characterised in that the pixels are arranged in groups of two pixels adjoining each other by arranging the data lines in groups of two pixels adjoining each other and one storage capacitor line is provided every two adjoining pixels between a plurality of the data lines in the same direction of the data lines whereby two storage capacitors corresponding to the two adjoining pixels are provided for each the storage capacitor line and one auxiliary storage capacitor is provided to be shared by every two adjoining pixels.

8. Liquid crystal display apparatus wherein a plurality of pixels are arranged in a matrix at the intersections of a plurality of scan lines and a plurality data lines and storage capacitor lines are provided to supply the pixels with storage capacitors, characterised in that the pixels are arranged in groups of four pixels adjoining each other by arranging the scan lines in groups of two pixels adjoining each other and by arranging the data lines in groups of two pixels adjoining each other and one storage capacitor line is provided between the scan lines in the same direction of the scan lines whereby four storage capacitors corresponding to the four adjoining pixels are provided for each storage capacitor line and one auxiliary storage capacitor is provided to be shared by every four adjacent pixels.

9. Liquid crystal display apparatus wherein a plurality of pixels are arranged in a matrix at the intersections of a plurality of scan lines and a plurality data lines and storage capacitor lines are provided to supply the pixels with storage capacitors, characterised in that the pixels are arranged in groups of four pixels adjoining each other by arranging the scan lines in groups of two pixels adjoining each other and by arranging the data lines in groups of two pixels adjoining each other and one storage capacitor line is provided between the data lines in the same direction of the data lines whereby four storage capacitors corresponding to the four adjoining pixels are provided for each storage capacity line and one auxiliary storage capacitor is provided to be shared by every four adjacent pixels.

10. Liquid crystal display apparatus as claimed in any preceding claim, wherein the capacitance of the auxiliary storage capacitor is less than that of the storage capacitor.

## FIG. 1

FIG 2

FIG. 3

FIG. 4

FIG. 5